# FASCICULE DE BREVET EUROPEEN

(11) **EP 1 734 842 B1**
(45) Date de publication et mention de la délivrance du brevet: **15.05.2019**
(21) Numéro de dépôt: 05742825.2
(22) Date de dépôt: 18.03.2005
(51) Int. Cl.: A44B 18/00, F16B 5/07

(54) **ELEMENT DE FIXATION INTERMEDIAIRE.**
ZWISCHENBEFESTIGUNGSELEMENT
INTERMEDIATE FIXING ELEMENT

(30) Priorité: 23.03.2004 FR 0402964
(43) Date de publication de la demande: 27.12.2006
(73) Titulaire: Aplix, 75008 Paris (FR)
(72) Inventeur: HAMMER, Pavel, 72116 MÖSSINGEN/OSCHINGEN (DE)
(74) Mandataire: Eidelsberg, Olivier Nathan
(86) Numéro de dépôt international: PCT/FR2005/000663
(87) Numéro de publication internationale: WO 2005/096864

(56) Documents cités:
- EP-A- 0 464 754
- US-A1- 2002 125 605
- US-B1- 6 451 239

## Description

La présente invention se rapporte à un élément de fixation intermédiaire, destiné à assurer la liaison entre une première pièce et une deuxième pièce, et comportant une plaque de laquelle font saillie d'une part des crochets pour une fixation par coopération avec des boucles de la deuxième pièce et d'autre part un élément d'ancrage, notamment en forme de sapin pour une fixation à la première pièce. La présente invention se rapporte également à un assemblage constitué d'une première pièce, d'une deuxième pièce et d'un élément de fixation intermédiaire suivant l'invention.

Par exemple dans le domaine de l'automobile, on est souvent amené à fixer à une première pièce, par exemple à un plafond, une deuxième pièce, par exemple un pavillon. On souhaite, par exemple en cas de réparation, pouvoir retirer le pavillon.

Pour ce faire, on connaît un élément de fixation intermédiaire constitué d'une plaque plane, ayant une première surface et une deuxième surface opposée à la première surface, un élément, par exemple en forme de sapin, pouvant s'enficher dans un trou complémentaire de la première pièce, étant rapporté à la première face (que l'on appellera face supérieure dans la suite), tandis que des crochets, également rapportés, font saillie de la deuxième face, pour coopérer, par exemple avec des boucles issues d'un tissu à fixer pour assurer la fixation du tissu à la première pièce qui peut être, par exemple, un plafond d'automobile.

La fabrication de ce type d'élément de fixation intermédiaire est longue et compliquée, et peu adaptée à une production industrielle à grande échelle, notamment en raison du fait que ces éléments de fixation intermédiaire ne sont pas réalisés d'une seule pièce.

On connaît également, notamment par les documents EP0465983, EP0464754 et US 6187247, des éléments de fixation de ce genre, comportant une plaque plane dont sont issus d'une pièce des crochets, formés par moulage par injection. Pour permettre la fabrication par moulage des crochets d'une pièce avec la plaque, il est nécessaire que la plaque elle même soit suffisamment souple pour permettre l'éjection des crochets de leur moule. En utilisation, la fixation des crochets de ces éléments de fixation avec des boucles est de mauvaise qualité, avec une tendance au décrochage sur le long terme sous l'effet de vibrations, notamment dans un véhicule automobile, par pelage progressif.

De US 6 451 239, il est connu une plaque à crochets réalisés par moulage, dans lequel on réalise le moule à cavités de moulage ou "tubelets" en caoutchouc et le matériau du moule est suffisamment élastique pour que les parois des cavités "lâchent" quelque peu et permettent aux crochets d'être éjectés sans que ceux-ci ne se détériorent En outre, le profil des crochets y est supérieur à 0,55.

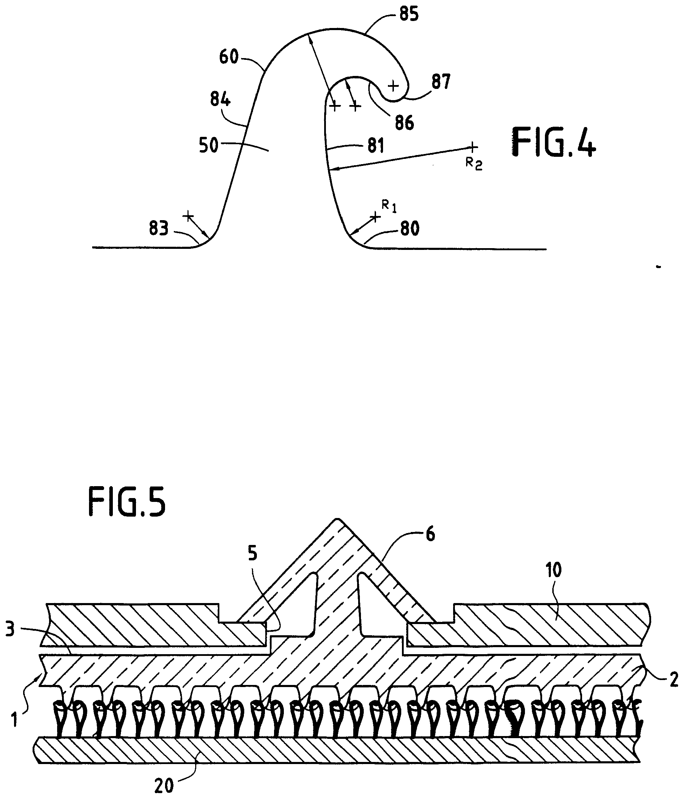

De US 2002/0125605, il est décrit une bande souple à crochets. En particulier, il n'y est pas prévu de moyens d'ancrage issus de la face opposée aux crochets. Il n'est pas non plus décrit de plaque sensiblement rigide. On le constate aux figures représentant les procédés de fabrication de l'élément de fixation, en particulier la figure 4 ou 4D du petit rouleau de renvoi entre les rouleaux 80 et 87 qui implique qu'il est impossible que le plaque soit sensiblement rigide.

La présente invention vise à surmonter les inconvénients de l'art antérieur en proposant un élément de fixation du genre décrit précédemment qui permet d'obtenir une fixation excellente, même à long terme, qui ne se dégrade pas sous l'effet de vibrations, et qui soit pourtant d'une fabrication rapide et peu coûteuse.

Suivant l'invention, l'élément de fixation intermédiaire est tel que défini à la revendication 1.

Des perfectionnements font l'objet des sous-revendications.

On entend dans la présente demande par "sensiblement rigide" une plaque qui au moins tient sa forme de soi-même, et notamment qui ne peut pas se courber de soi-même sous l'effet de son propre poids. De préférence, on entend par "sensiblement rigide" une plaque qui ne peut pas être courbée de manière réversible, en particulier au-delà d'un angle de courbure de quelques degrés, notamment au-delà de 15°, de préférence 10°, plus préférentiellement 5°, l'angle de courbure étant l'angle entre un plan sur lequel est maintenue une partie de la plaque et la tangente à la plaque au point le plus éloigné du plan sur lequel est maintenue ladite une partie.

On entend par "recouvrir sensiblement la face inférieure" le fait de recouvrir au moins 65% de la surface de la face inférieure.

On entend par "région de crochets" la région délimitée par une ligne fermée passant par les projections perpendiculaires des axes de tiges de crochets sur la base dont sont issus les crochets et qui est telle que l'ensemble des projections perpendiculaires des axes de tiges de crochets se trouve sur la ligne ou à l'intérieur de celle-ci.

Pour un crochet, on définit, en coupe longitudinale, perpendiculairement à la face inférieure :
l'axe (imaginaire) du crochet comme étant la droite perpendiculaire à la face inférieure et passant par le milieu de la base du crochet au niveau de la face inférieure ;
le segment de droite (imaginaire) de délimitation à droite (respectivement à gauche) entre la tige et la tête du crochet comme étant le premier segment de droite (imaginaire) parallèle à l'axe du crochet, en partant de l'axe et en se décalant vers la droite, qui coupe la courbe enveloppe en deux points et qui s'étend entre ces deux points ;
la hauteur maximale HM du crochet comme étant la distance, mesurée perpendiculairement à la face inférieure, de la face inférieure au point le plus haut de la courbe enveloppe dans ladite section en coupe longitudinale définissant le crochet ;
   - la hauteur minimale Hm du crochet comme étant la distance, mesurée perpendiculairement à la face inférieure, dans ladite section en coupe longitudinale, de la face inférieure au point le plus éloigné du segment de délimitation de la courbe enveloppe définissant la tête de crochet ; et
   - la hauteur Ho d'accrochage du crochet, comme étant la distance, mesurée perpendiculairement à la face inférieure, de la face inférieure au point le plus haut de la partie de la courbe enveloppe définissant la tête et qui s'étend du point le plus bas délimita nt le segment de délimitation de la tête jusqu'au point de la tête le plus éloigné du segment de délimitation, dans ladite section en coupe longitudinale.

Dans les cas limites on peut avoir égalité du point le plus haut et/ou du point le plus bas et/ou du point d'accrochage le plus haut.

On définit alors le profil de la tête comme étant le rapport (HM-Ho)/(HM-Hm). A la limite supérieure, ce profil est égal à 1, ce qui correspond à une tête de crochet horizontale ou orientée vers le haut (dans ces deux cas on a Hm=Ho).

En prévoyant ainsi de telles formes et dimensions des crochets, on peut produire facilement par une seule étape de moulage l'élément intermédiaire de fixation, avec démoulage des crochets malgré la rigidité de la plaque.

La présente invention se rapporte également à un assemblage constitué d'une première pièce, d'une deuxième pièce et d'un élément de fixation intermédiaire suivant l'invention, l'élément d'ancrage étant ancré à la première pièce, tandis que la deuxième pièce comporte des boucles qui coopèrent avec les crochets issus de la face inférieure de l'élément de fixation intermédiaire.

Suivant un autre mode de réalisation préféré de l'invention, les crochets sont agencés sous la forme de rangées et colonnes, par exemple en étant orientés en alternance dans une direction et dans l'autre, d'une rangée à l'autre ou d'une colonne à l'autre.

Suivant un mode de réalisation préféré de l'invention, les crochets sont réalisés de manière à ce que la région de crochets recouvre plus de 70% de toute la face inférieure de l'élément de fixation intermédiaire, de préférence plus de 80%, et plus préférablement plus de 90%, en particulier 100%.

Suivant un mode de réalisation particulièrement préféré de l'invention, le crochet est constitué d'une tige et d'une partie de tête, la tête faisant saillie latéralement de la tige, et la tige s'évase de la tête vers la face inférieure.

La présente invention se rapporte également à un procédé de fabrication pour obtenir par moulage en une seule étape un élément de fixation intermédiaire suivant l'invention tel que défini à la revendication 10 et à un assemblage suivant la revendication 9.

Il est maintenant décrit, à titre d'exemple uniquement, un mode de réalisation préféré de l'invention, en se reportant aux dessins dans lesquels :
- la figure 1: est une vue en coupe d'un élément de fixation intermédiaire suivant l'invention ancré dans un plafond d'automobile ;
- la figure 2: est une vue en perspective d'une partie de l'élément de fixation intermédiaire suivant l'invention,
- la figure 3a: représente un moule tel qu'utilisé pour obtenir un élément de fixation intermédiaire suivant l'invention ;
- la figure 3b: représente une partie du moule de la figure 3a ;
- la figure 4: représente l'état d'un crochet de l'élément de fixation intermédiaire une fois terminé,
- la figure 5: représente un assemblage d'une première pièce, d'une deuxième pièce et d'un élément de fixation intermédiaire suivant l'invention, et
- la figure 6: représente le crochet de la figure 4 à plus petite échelle.

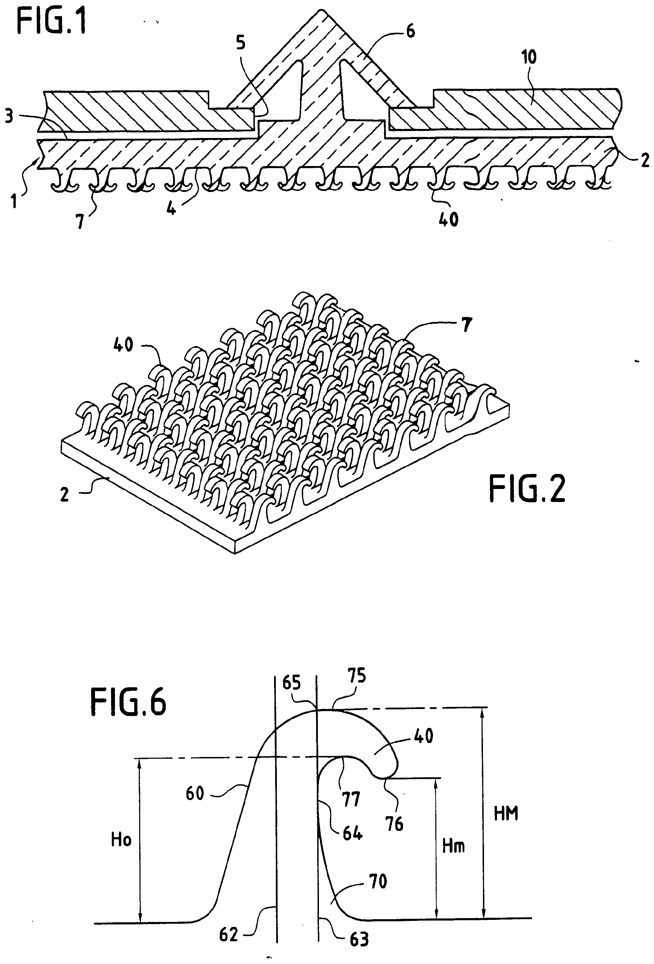

A la figure 1, il est représenté un élément de fixation intermédiaire 1 suivant l'invention. L'élément de fixation intermédiaire 1 est constitué d'une plaque 2 sensiblement rigide, c'est-à-dire ayant une forme qui ne peut pas se courber de soi-même ou sous l'effet de son propre poids. En outre la plaque ne peut pas être courbée de manière réversible au delà d'un angle de courbure de 5°. Cet angle de courbure est défini de la manière suivante : On pose la plaque sur un plan en la maintenant à l'un de ses bords tandis qu'on tire vers le haut un bord opposé pour courber la plaque. L'angle de courbure est l'angle entre la tangente à la partie de la plaque au niveau du bord que l'on a tiré et le plan.

La plaque 2 a une forme carrée, en ayant une face 3 supérieure et une face 4 inférieure. De la face 3 supérieure est issue une pièce d'ancrage 6 en forme de sapin, tandis que de la face 4 inférieure sont issus des crochets 7. De préférence, les crochets 7 recouvrent au moins la moitié de la surface de la face 4 inférieure lorsque l'on regarde directement de dessus. Les crochets 7, de préférence, sont agencés sous forme de rangées et de colonnes, les crochets étant orientés, comme on peut le voir à la figure 2, avec une orientation alternée de leur tête suivant la rangée. L'élément de fixation intermédiaire est ancré dans une pièce 10 de plafond d'une automobile par insertion de la pièce 6 d'ancrage dans un trou 5 et encliquetage. Comme on le voit à la figure 5, une pièce, par exemple un pavillon 20, est fixée aux crochets de la pièce de fixation intermédiaire par l'intermédiaire de boucles, par exemple des boucles tricotées dans un tissu fixé au pavillon. Aux figures, la plaque est plane. Elle pourrait également être par exemple en forme de toit ou de dôme, par exemple en forme de calotte sphérique ou cylindrique, avec par exemple la convexité tournée du côté des crochets et la concavité du côté des sapins. Même lorsque la plaque est en dôme, elle est sensiblement rigide.

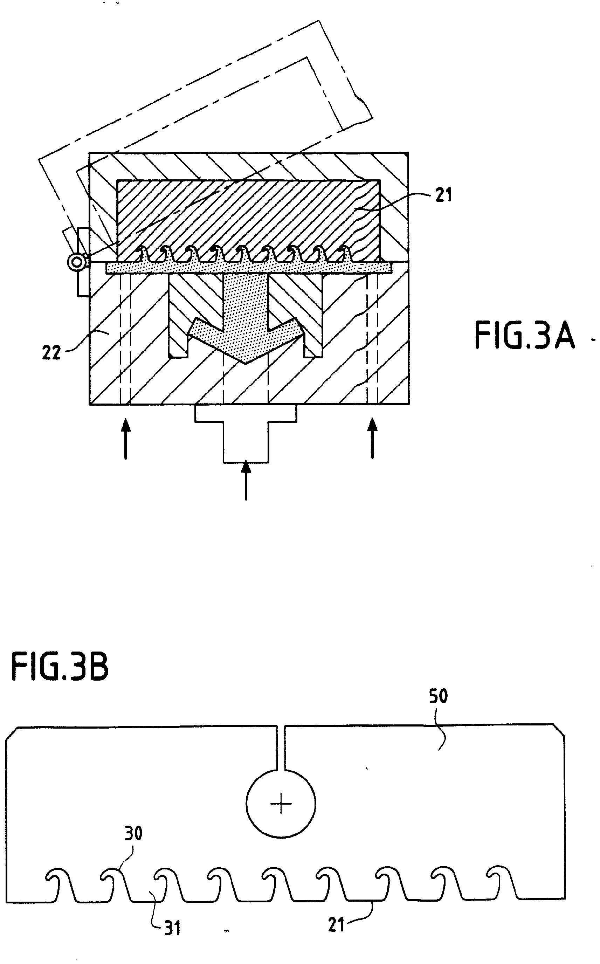

A la figure 3a, il est représenté une partie supérieure 21 d'un moule 22 pour former les crochets. Cette partie supérieure du moule comporte des cavités 30 ayant une forme complémentaire de celle des crochets. Une fois la matière thermoplastique injectée dans le moule, on laisse solidifier, puis on retire la partie 21 supérieure du moule 22. Les crochets 7, lors de cette extraction, se redressent partiellement de manière momentanée lorsqu'ils sont retirés du moule 22. Ensuite, après un très court laps de temps, les crochets 7 reviennent par élasticité à leur forme incurvée qu'ils avaient dans le moule.

Pour former le la partie 21 supérieure du moule, on utilise des lamelles 50 (voir figure 3B) que l'on empile les unes sur les autres, chaque lamelle comportant sur une tranche des cavités 30, séparées les unes des autres par des parties 31 intermédiaires pleines. Les cavités 30 sont ainsi faciles à réalisée par usinage des lamelles 50. Une fois empilées les unes sur les autres, avec un décalage de sorte qu'une cavité 30 soit contigu à deux parties intermédiaires, on obtient une matrice de cavités 30 pour former les crochets.

Les crochets 7 sont moulés par exemple en polypropylène. Le crochet 7 à la sortie du moule a tendance à devenir moins crochu, c'est-à-dire que la tête 40 du crochet 7 a tendance à se redresser. Cette tête 40 se rabaisse ensuite pour prendre sa forme finale. Ce crochet comporte, d'une part, une partie de tige 50 et, d'autre part, une partie de tête 40. En section transversale vue de dessus, la tige a ainsi une forme rectangulaire dont la dimension en surface diminue depuis la base jusqu'à la tête.

Aux figures 4 et 6, un crochet suivant l'invention est représenté en coupe longitudinale. Dans le plan des figures, il est ainsi défini une courbe enveloppe 60 du crochet. Pour le crochet 7, on définit l'axe 62 (imaginaire) du crochet comme étant la droite perpendiculaire à la face inférieure 4 et passant par le milieu de la base 61 du crochet.

On définit la droite (imaginaire) de délimitation à droite de la tête du crochet la première droite 63 parallèle à l'axe 62 du crochet, en partant de l'axe 62 et en se décalant vers la droite, qui coupe la courbe enveloppe 60 en deux points (64 et 65). La partie du crochet 7 à droite de la droite 63 et au dessus du point 64 est appelée la tête 40 du crochet. De la même manière on définit une droite (imaginaire) de délimitation à gauche. Dans le cas de la figure 4, cette courbe à gauche peut être définie pour le crochet qui se trouve derrière le crochet 7. Dans le cas du crochet 7, cette droite de délimitation à gauche n'existe pas. Dans le cas d'un crochet ayant une double tête, on aurait alors une droite de délimitation à gauche et une à droite. La tige 50 du crochet est définie, dans le cas où une seule droite de délimitation peut être définie, comme la partie du crochet qui se trouve de l'autre côté du segment (64, 65) de droite de délimitation 63 (c'est-à-dire à gauche de la droite 63 dans le cas du crochet 7). Dans le cas d'un crochet à double tête, la tige sera la partie du crochet qui se trouve entre les deux droites de délimitation gauche et droite (En fait les deux plans qui forment ces deux droites dans la vue en coupe des figures 4 et 6).

De manière préférable, la tige 50 est évasée (sa largeur dans la plan de la figure 4 ou 6 diminue) du bas vers le haut du crochet.

En outre, la partie droite 70 (respectivement gauche) de la tige 50, c'est-à-dire la partie de la tige entre l'axe 62 et le tronçon de la courbe enveloppe 60 qui s'étend jusqu'à l'intersection de la courbe enveloppe avec la droite 63 de délimitation à droite (respectivement à gauche) est évasée.

En section transversale vue de dessus, la tige et la partie de tige droite (respectivement gauche) ont une forme rectangulaire dont la dimension en longueur (largeur horizontale de la tige dans le plan des figures 4 ou 6) et/ou en épaisseur (suivant la direction perpendiculaire aux figures 4 ou 6) diminue depuis la base jusqu'à la tête. Cependant, on peut aussi avoir une épaisseur constante. De même, la tête du crochet a une forme rectangulaire vu de dessus, avec une épaisseur constante ou décroissante en section transversale de bas en haut.

Pour la tête 40, on définit la plus grande épaisseur en hauteur comme étant, mesuré le long de l'axe 62 du crochet la différence entre la hauteur maximale HM de la tête (distance de la face inférieure 4 au point 75 le plus haut, mesurée parallèlement à l'axe 62) et la hauteur minimum Hm de la tête (la distance de la face inférieure 4 au point 76 le plus bas de la tête du crochet).

Quant à la hauteur Ho d'accrochage, elle est égale à la distance le long de l'axe 62, entre la face inférieure 4 et le point 77 le plus haut de la section de la courbe enveloppe définissant la surface inférieure de la tête 40.

On définit alors le profil de la tête comme étant le rapport (HM-Ho)/(HM-Hm). A la limite supérieure, ce profil est égal à 1, ce qui correspond à une tête de crochet horizontale ou orientée vers le haut (dans ces deux cas on a Hm=Ho).

Suivant l'invention, le profil de la tête est supérieur à 0,55, notamment supérieur à 0,60, de préférence supérieur à 0,80, et plus préférablement supérieur à 0,9.

Lorsque au moins la partie droite (respectivement gauche) de crochet est évasée, le profil de tête droite (respectivement gauche) est de préférence supérieur ou égal à 0,55, plus préférablement supérieur à 0,60, et notamment est compris entre 0,60 et 0,90, de préférence entre 0,65 et 0,85, par exemple 0,66.

En particulier la partie de la courbe enveloppe définissant la tige du côté de la tête est incurvée, et notamment est constituée d'un premier arc 80 de cercle (rayon R1 de préférence compris entre 0,1 et 0,3 mm) et d'un deuxième arc 81 de cercle de plus grand rayon R2 que R1 (rayon R2 compris de préférence entre 0,35 et 2 mm) qui s'étend sensiblement jusqu'à couper la droite de délimitation 63 à droite, à une hauteur au moins égale à la moitié de la hauteur HM.

Du côté opposé à la tête, la partie de la courbe enveloppe définissant la tige est constitué d'un arc 83 de cercle, de préférence identique au premier arc 80 de cercle et d'une droite 84 qui s'étend inclinée par rapport à l'axe 62 sensiblement jusqu' à une hauteur correspondant à la hauteur à laquelle le deuxième arc 82 de cercle coupe la droite de délimitation 63 à droite.

La partie de l'enveloppe définissant la tête est constituée d'un arc de cercle 85 supérieur (définissant la surface supérieure de la tête) et d'un arc de cercle 86 inférieur (définissant la surface inférieure de la tête) et d'un arc de cercle 87 intermédiaire. Le rayon de l'arc de cercle 85 supérieur est compris de préférence entre 0,19 et 0.65 mm, par exemple 0,52mm, le rayon de l'arc de cercle inférieur est compris de préférence entre 0,07 et 0,35mm, par exemple 0,19mm et le rayon du cercle intermédiaire est compris de préférence entre 0,04 et 0,16mm, par exemple 0,11mm.

De préférence la partie de la courbe enveloppe définissant la tête ne comporte pas de point de rebroussement (sa fonction dérivée première est continue en tout point). L'absence de partie « pointue » dans la tête du crochet aidant au démoulage du crochet lors de sa fabrication.

La hauteur HM est de préférence comprise entre 0,25 et 2mm, par exemple égale à 1,43.

La hauteur Hm est comprise de préférence entre 0,1 et 1,05 mm, par exemple 0,91 mm.

La hauteur Ho est comprise de préférence entre 0,15 mm et 1,25 mm, par exemple 1,12 mm.

La largeur au niveau de la plaque 2 de la tige est comprise de préférence entre 0,3 mm et 1,5 mm, par exemple 1,21 mm.

La largeur de la tige à la hauteur de l'intersection de la courbe enveloppe avec la droite de délimitation à droite (respectivement à gauche) est comprise de préférence entre 0,22 et 0,70mm, par exemple 0,45 mm.

L'épaisseur en hauteur HM-Ho est de préférence comprise entre 0,10 et 0,50 mm, plus préférablement entre 0,20 et 0,40 mm, par exemple 0,32 mm.

L'épaisseur en hauteur de la base est de préférence comprise entre 0,4 mm et 4 mm, plus préférablement entre 1 et 2mm.

Le rapport de l'épaisseur en hauteur HM-Ho sur l'épaisseur en hauteur de la base est inférieure à 1, de préférence inférieure à 0,5, plus préférablement inférieur à 0,3, notamment inférieur à 0,2.

Pour former l'élément d'ancrage ou cheville ou embase 6, ici en forme d'arbre, on utilise un procédé de moulage classique à tiroir. En effet, il n'y a en général qu'un seul élément de ce type (voir deux ou trois), à former au dos de l'élément de fixation et les tiroirs de moulage ne sont ainsi pas trop compliqués à réaliser et à utiliser, (emboîtage, déboîtage), contrairement au cas de la formation des crochets, qui parce qu'ils sont de plus petites dimensions et en un plus grand nombre, ne peuvent pas être réalisés simplement et facilement par un tel système de moulage à tiroirs.

En coupe longitudinale (figures 4 ou 6 par exemple), les crochets ont la forme d'une crête de vague. Ils sont constitués d'une tige 50 définie par deux parois latérales (correspondant aux sections 80, 81, 82, 83, 84, 85) et de deux parois frontales avant et arrière (non visible à la figure), pour former une sorte de parallélépipède ou dièdre.

La dimension en épaisseur (perpendiculairement à la figure 4) de la tête est de préférence inférieure ou égale à l'épaisseur de la tige, notamment l'épaisseur de la partie supérieure de la tige.

Enfin, la tête peut faire saillie de la tige dans un même plan (celui de la figure) mais dans deux directions opposées. On obtient alors un harpon à deux têtes qui au sens de la présente invention est considéré comme un crochet.

Comme matériaux thermoplastiques appropriés pour les éléments de fixation suivant l'invention, on peut prévoir des polypropylènes ou des polyuréthanes. Par exemple, comme polypropylène, on peut choisir un mélange de polyester insaturé constitué de 50% d'homopolymère et de 50% de copolymère, ayant un index de fluidité à l'état fondu de 22g/10mn et un module de flexion de 130,000 à 150,000psi. D'autres matériaux possibles comportent un polypropylène de la société Atofina, PPC 5660, ayant un indice de fluidité à l'état fondu de 7 et un module de flexion de 175,000 psi, des copolymères de propylène de BP Amoco (Acclear 8949 et Acctuf impact copolymer 3934X) ayant des valeurs d'index de fluidité à l'état fondu de 35 à 100, et des modules de flexion de 190.000 à 250.000 psi ; des polystyrènes, des acrylonitrile butadiène styrènes, du polyéthylène haute densité, du polyéthylène linéaire basse densité, du polycarbonate. Les index à l'état fondu sont compris entre 1 et 100, et les modules de flexion compris entre 30.000 et 1.140.000 de préférence entre 100.000 et 1.000.000, plus préférablement entre 300.000 et 1.000.000.

D'autres résines que des résines à base de propylène qui conviennent peuvent être du polystyrène choc, de l'acrylonitrile-butadiène stryrène, du nylon, du polyéthylène haute densité, du polyéthylène linéaire basse densité, du polycarbonate et des résines thermoplastiques olefiniques. On peut également prévoir des polypropylènes renforcés par des fibres de verre longues, ayant un module de flexion très élevé (résine 30YM240/10010 ayant un module de flexion de 856000 psi et résine 40YM240/10010 ayant un module de flexion de 1.140.000 psi, vendues par la société StaMax). Dans ce cas les fibres de verre longue ne migrent pas dans les cavités (qui sont trop petites ou trop minces pour que les fibres longues y pénètrent) et on obtient une plaque très rigide et pourtant des crochets suffisamment souples pour s'éjecter des cavités.

Il est donné ici, comme exemple, une application dans l'automobile. Cependant, l'élément de fixation intermédiaire suivant l'invention peut bien évidemment s'appliquer à d'autres domaines, par exemple le domaine de la construction, de l'ameublement, de l'aéronautique, du transport, etc.

## Revendications

1. Elément (1) de fixation intermédiaire, d'une pièce, comportant une plaque (2), de préférence sensiblement plane, ayant une première face ou face supérieure et une deuxième face ou face inférieure, au moins un élément d'ancrage (6), par exemple en forme de sapin, faisant saillie de la face supérieure, et des crochets (7), issus de moulage d'une région recouvrant sensiblement toute la face inférieure de la plaque, les crochets, la plaque et les éléments d'ancrage étant d'une seule pièce issue de moulage en un même matériau, dans lequel, pour un crochet comportant une tige et une tête qui fait saillie latéralement de la tige, on définit, en coupe longitudinale, perpendiculairement à la face inférieure :
- l'axe (62) du crochet comme étant la droite perpendiculaire à la face (4) inférieure et passant par le milieu de la base (61) du crochet au niveau de la face inférieure ;
- le segment (63) de droite de délimitation à droite, respectivement à gauche, entre la tige et la tête du crochet comme étant le premier segment de droite parallèle à l'axe (62) du crochet, en partant de l'axe et en se décalant vers la droite, qui coupe la courbe (60) enveloppe en deux points (64, 65) et qui s'étend entre ces deux points ;
- la hauteur maximale HM du crochet comme étant la distance, mesurée perpendiculairement à la face inférieure, de la face inférieure au point le plus haut de la courbe enveloppe dans ladite section en coupe longitudinale définissant le crochet ;
- la hauteur minimale Hm du crochet comme étant la distance, mesurée perpendiculairement à la face inférieure, dans ladite section en coupe longitudinale, de la face inférieure au point le plus éloigné du segment de délimitation de la courbe enveloppe définissant la tête de crochet ; et
- la hauteur Ho d'accrochage du crochet, comme étant la distance, mesurée perpendiculairement à la face inférieure, de la face inférieure au point le plus haut de la partie de la courbe enveloppe définissant la tête et qui s'étend du point le plus bas délimitant le segment de délimitation de la tête jusqu'au point de la tête le plus éloigné du segment de délimitation, dans ladite section en coupe longitudinale,
**caractérisé en ce que** la plaque (2) est sensiblement rigide, c'est-à-dire au moins tient sa forme de soi-même, et notamment ne peut pas se courber de soi-même sous l'effet de son propre poids ; et les crochets (7) sont réalisés avec une forme et une dimension telles que le profil (HM-Ho)/(HM-Hm) d'au moins certains des crochets, de préférence des crochets, est supérieur ou égal à 0,55, les crochets (7), après avoir été formés dans un moule (22) et avoir été démoulés du moule, reprenant sensiblement la forme initiale qu'ils ont dans le moule (22), les crochets étant suffisamment souples pour leur permettre de se courber pendant le démoulage.

2. Elément suivant la revendication 1, **caractérisé en ce que** la tige (50) de chaque crochet est évasée de la tête (40) vers la base dont sont issus les crochets.

3. Elément suivant l'une des revendications 1 ou 2, **caractérisé en ce que** le profil du crochet (7) est compris entre 0,60 et 0,90.

4. Elément suivant l'une des revendications 1 à 3, **caractérisé en ce que** l'épaisseur en hauteur HM-Ho est de préférence comprise entre 0,10 et 0,50 mm, plus préférablement entre 0,20 et 0,40 mm, par exemple 0,32 mm.

5. Elément suivant l'une des revendications 1 à 4, **caractérisé en ce que** l'épaisseur en hauteur de la base dont sont issus les crochets est de préférence comprise entre 0,4 mm et 4 mm, plus préférablement entre 1 et 2 mm.

6. Elément suivant l'une des revendications 1 à 5, **caractérisé en ce que** le rapport de l'épaisseur en hauteur HM-Ho sur l'épaisseur en hauteur de la base dont sont issus les crochets est inférieure à 1, de préférence inférieure à 0,5, plus préférablement inférieure à 0,3, notamment inférieure à 0,2.

7. Elément suivant l'une des revendications 1 à 6, **caractérisé en ce que** la partie de la courbe enveloppe définissant la tête ne comporte pas de point de rebroussement (sa dérivée première est continue).

8. Elément suivant l'une des revendications 1 à 7, **caractérisé en ce que** les crochets et la plaque sont en polypropylène, en ayant un module de flexion compris entre 6894,76.10⁵Pa (100.000 psi) et 6894,76.10⁶Pa (1.000.000 psi).

9. Assemblage constitué d'une première pièce (10), notamment un plafond d'automobile, d'une deuxième pièce (20), notamment un pavillon d'automobile, et d'un élément (1) de fixation intermédiaire suivant l'une des revendications 1 à 8, l'élément (6) d'ancrage étant ancré à la première pièce, tandis que la deuxième pièce comporte des boucles qui coopèrent avec les crochets issus de la face inférieure de l'élément (1) de fixation intermédiaire.

## Patentansprüche

1. Einteiliges Zwischenbefestigungselement (1), das eine vorzugsweise im Wesentlichen ebene Platte (2), die eine erste oder obere Fläche und eine zweite oder untere Fläche hat, mindestens ein beispielsweise tannenbaumförmiges Verankerungselement (6), das von der oberen Fläche vorragt, und aus einem im Wesentlichen die gesamte untere Fläche der Platte abdeckenden Bereich geformte Haken (7) aufweist, wobei die Haken, die Platte und des Verankerungselemente einstückig aus demselben Material geformt sind, in dem für einen einen Stiel und einen seitlich vom Stiel vorragenden Kopf aufweisenden Haken im Längsschnitt senkrecht zu der unteren Fläche Folgendes definiert wird:
- die Achse (62) des Hakens als die Gerade, die senkrecht zu der unteren Fläche (4) und durch die Mitte der Basis (61) des Hakens auf der Höhe der unteren Fläche verläuft,
- die Begrenzungsstrecke (63) rechts beziehungsweise links zwischen dem Stiel und dem Kopf des Hakens als die erste parallel zu der Achse (62) des Hakens verlaufende Strecke, weg von der Achse und nach rechts versetzt, die die Mantelkurve (60) an zwei Punkten (64, 65) schneidet und die sich zwischen diesen beiden Punkten erstreckt,
- die maximale Höhe HM des Hakens als der senkrecht zu der unteren Fläche gemessene Abstand der unteren Fläche vom höchsten Punkt der Mantelkurve in dem den Haken definierenden Längsschnittabschnitt,
- die minimale Höhe Hm des Hakens als der senkrecht zu der unteren Fläche gemessene Abstand, in dem Längsschnittabschnitt, der unteren Fläche von dem am weitesten von der Begrenzungsstrecke der den Hakenkopf definierenden Mantelkurve entfernt liegenden Punkt und
- die Einhängehöhe Ho des Hakens als der senkrecht zu der unteren Fläche gemessene Abstand der unteren Fläche vom höchsten Punkt des den Kopf definierenden Teils der Mantelkurve, der sich vom tiefsten, die Begrenzungsstrecke des Kopfs begrenzenden Punkt bis zu dem am weitesten von der Begrenzungsstrecke entfernt liegenden Punkt des Kopfs in dem Längsschnittabschnitt erstreckt,
**dadurch gekennzeichnet, dass** die Platte (2) im Wesentlichen starr ist, d. h. mindestens ihre Form selbst beibehält und sich insbesondere unter ihrem eigenen Gewicht nicht selbst krümmen kann, und die Haken (7) mit einer solchen Form und Abmessung ausgeführt sind, dass das Profil (HM-Ho)/(HM-Hm) mindestens gewisser der Haken, vorzugsweise der Haken, größer oder gleich 0,55 ist, wobei die Haken (7), nachdem sie in einer Form (22) geformt und aus der Form entformt worden sind, im Wesentlichen wieder die Ausgangsform einnehmen, die sie in der Form (22) haben, wobei die Haken hinreichend weich sind, dass sie sich während des Entformens krümmen können.

2. Element nach Anspruch 1, **dadurch gekennzeichnet, dass** sich der Stiel (50) jedes Hakens vom Kopf (40) zu der Basis hin, aus der die Haken hervorgehen, verbreitert.

3. Element nach einem der Ansprüche 1 oder 2, **dadurch gekennzeichnet, dass** das Profil des Hakens (7) zwischen 0,60 und 0,90 beträgt.

4. Element nach einem der Ansprüche 1 bis 3, **dadurch gekennzeichnet, dass** die höhenmäßige Dicke HM-Ho vorzugsweise zwischen 0,10 und 0,50 mm, bevorzugter zwischen 0,20 und 0,40 mm, beispielsweise 0,32 mm, beträgt.

5. Element nach einem der Ansprüche 1 bis 4, **dadurch gekennzeichnet, dass** die höhenmäßige Dicke der Basis, aus der die Haken hervorgehen, vorzugsweise zwischen 0,4 mm und 4 mm, bevorzugter zwischen 1 und 2 mm beträgt.

6. Element nach einem der Ansprüche 1 bis 5, **dadurch gekennzeichnet, dass** das Verhältnis der höhenmäßigen Dicke HM-Ho zu der höhenmäßigen Dicke der Basis, aus der die Haken hervorgehen, kleiner 1, vorzugsweise kleiner 0,5, bevorzugter kleiner 0,3, insbesondere kleiner 0,2 ist.

7. Element nach einem der Ansprüche 1 bis 6, **dadurch gekennzeichnet, dass** der den Kopf definierende Teil der Mantelkurve keinen Scheitelpunkt aufweist (ihre erste Ableitung ist kontinuierlich).

8. Element nach einem der Ansprüche 1 bis 7, **dadurch gekennzeichnet, dass** die Haken und die Platte aus Polypropylen sind und ein Biegungsmodul zwischen 6894,76.10⁵ Pa (100 000 psi) und 6894,76.10⁶ Pa (1 000 000 psi) haben.

9. Anordnung, die aus einem ersten Teil (10), inbesondere einem Kraftfahrzeugdach, einem zweiten Teil (20), insbesondere einer Kraftfahrzeugdachhaut, und einem Zwischenbefestigungselement (1) nach einem der Ansprüche 1 bis 8 besteht, wobei das Verankerungselement (6) am ersten Teil verankert ist, während das zweite Teil Schlaufen aufweist, die mit den aus der unteren Fläche des Zwischenbefestigungselements (1) hervorgehenden Haken zusammenwirken.

## Claims

1. Intermediate fastening element (1), in one piece, comprising a plate (2) which is preferably substantially flat, having a first face or upper face and a second face or lower face, at least one anchoring element (6), for example in the shape of a fir tree, projecting from the upper face, and hooks (7) arising through moulding from a region covering substantially the whole lower face of the plate, the hooks, the plate and the anchoring elements being in one piece arising through moulding in a same material, in which, for a hook comprising a stem and a head projecting laterally from said stem, one defines in longitudinal section, perpendicularly to the lower face:
- the axis (62) of the hook as being the line perpendicular to the lower face (4) and passing via the middle of the base (61) of the hook at the level of the lower face;
- the right delimitation line segment (63) between the stem and the head of the hook as being the first line segment parallel to the axis (62) of the hook, starting from the axis and offsetting to the right, which cuts the envelope curve (60) at two points (64, 65) and which extends between these two points;
- the maximum height HM of the hook as being the distance measured perpendicularly to the lower face, from the lower face to the highest point of the envelope curve in said section in longitudinal section defining the hook;
- the minimum height Hm of the hook as being the distance measured perpendicularly to the lower face, in said section in longitudinal section, from the lower face to the most remote point of the delimitation segment of the envelope curve defining the hook head; and
- the fastening height Ho of the hook, as being the distance, measured perpendicularly to the lower face, from the lower face to the highest point of the section of the envelope curve defining the head and which extends from the lowest point delimiting the delimitation segment of the head as far as the most remote point of the head of the delimitation segment in said section in longitudinal section, **characterised in that** the plate (2) is
substantially rigid, that is at least holds its shape itself, and in particular cannot bend owing to the effect of its own weight; and the hooks (7) are realised with a shape and dimension such that the profile (HM-Ho)/(HM-Hm) of at least some of the hooks, preferably of the hooks, is greater than or equal to 0.55, the hooks (7), after having been formed in a mould (22) and having been removed from the mould, substantially resuming the initial form which they have in the mould (22), the hooks being sufficiently flexible to allow them to bend during removal from the mould.

2. Element according to claim 1, **characterised in that** the stem (50) of each hook widens from the head (40) to the base from which the hooks are issuing.

3. Element according to one of the claims 1 or 2, **characterised in that** the profile of the hook (7) is between 0.6 and 0.90.

4. Element according to one of the claims 1 to 3, **characterised in that** the thickness in height HM-Ho is preferably between 0.10 and 0.50 mm, more preferably between 0.20 and 0.40 mm, for example 0.32 mm.

5. Element according to one of the claims 1 to 4, **characterised in that** the thickness in height of the base from which the hooks are issuing is preferably between 0.4 mm and 4 mm, more preferably between 1 and 2 mm.

6. Element according to one of the claims 1 to 5, **characterised in that** the ratio of the thickness in height HM-Ho to the thickness in height of the base from which the hooks are issuing is less than 1, preferably less than 0.5, more preferably less than 0,3, in particular less than 0.2.

7. Element according to one of the claims 1 to 6, **characterised in that** the section of the envelope curve defining the head does not include a point of inflection (its first derivative is continuous).

8. Element according to one of the claims 1 to 7, **characterised in that** the hooks and the plate are made of polypropylene, having a flexion module between 6894.76 10⁵Pa (100,000 psi) and 6894.76 10⁶Pa (1,000,000 psi).

9. Assembly comprising a first element (10), in particular a motor car roof, a second element (20), in particular a motor car roof element, and an intermediate fastening element (1) according to one of the claims 1 to 8, the anchoring element (6) being anchored to the first element, whereas the second element comprises loops which cooperate with the hooks coming from the lower face of the intermediate fastening element (1).
